# EUROPEAN PATENT APPLICATION

(11) **EP 4 678 255 A1**
(43) Date of publication of application: **14.01.2026**
(21) Application number: 25185177.0
(22) Date of filing: 25.06.2025
(51) Int. Cl.: A63F 13/34, A63F 13/53, A63F 13/537, A63F 13/655, A63F 13/86

(54) **INFORMATION PROCESSING METHOD, SYSTEM, INFORMATION PROCESSING APPARATUS, AND COMPUTER PROGRAM**

(30) Priority: 05.07.2024 JP 2024108752
(71) Applicant: Nintendo Co., Ltd., Kyoto-shi, Kyoto 601-8501 (JP)
(72) Inventor: FUJITA, Akifumi, Kyoto, 601-8501 (JP)
(74) Representative: Bardehle Pagenberg Partnerschaft mbB Patentanwälte Rechtsanwälte

(57) **Abstract**

An information processing method in a system including at least one transmission terminal and at least one reception terminal is provided. The information processing method includes generating, at the transmission terminal, first image data. The generating the first image data includes generating, when an image captured by a camera includes a part of a human body, an image of an area which is a partial area of the captured image and includes the part of the human body, as the first image data. The information processing method includes transmitting, at the transmission terminal, the first image data, transmitting, at the transmission terminal, state data based on a state of capturing the human body in the captured image, receiving, at the reception terminal, the first image data and the state data, and generating, at the reception terminal, an image to be shown on a display based on the state data, the generated image including an image based on the first image data or an image based on second image data in place of the first image data.

## Description

The present disclosure relates to an information processing method, a system, an information processing apparatus, and a computer program.

### INTRODUCTION

A game system including a camera has been known (for example, Japanese Patent Laying-Open No. 2016-126042).

### SUMMARY

The present disclosure provides a scheme that realizes appropriate image display in an apparatus configured to receive image data generated based on an image captured by a camera.

(Configuration 1) According to one embodiment, an information processing method in a system including at least one transmission terminal and at least one reception terminal is provided. The information processing method includes generating, at the transmission terminal, first image data. The generating the first image data includes generating, when an image captured by a camera includes a part of a human body, an image of an area which is a partial area of the captured image and includes the part of the human body, as the first image data. The information processing method includes transmitting, at the transmission terminal, the first image data, transmitting, at the transmission terminal, state data based on a state of capturing the human body in the captured image, receiving, at the reception terminal, the first image data and the state data, and generating, at the reception terminal, an image to be shown on a display based on the state data, the generated image including an image based on the first image data or an image based on second image data in place of the first image data.

According to Configuration 1, the transmission terminal transmits the first image data and the state data based on thee state of capturing the human body in the captured image. The reception terminal can determine an image to be used for generation of an image to be shown on the display, based on the state data. An image in accordance with thee state of capturing the human body can thus be shown on the display.

(Configuration 2) In Configuration 1, the generating the first image data may include generating predetermined image data as the first image data when a first condition is satisfied. The first condition may be a condition satisfied when the captured image does not include the part of the human body. The state data may include first data indicating that the captured image does not include the part of the human body. According to Configuration 2, when the captured image does not include the part of the human body, the transmission terminal generates predetermined image data as the first image data and transmits first data indicating that the captured image does not include the part of the human body. The reception terminal can perform necessary processing based on the first data when it shows an image based on the predetermined image data.

(Configuration 3) In Configuration 2, the generating the first image data may include generating the predetermined image data as the first image data also when a second condition different from the first condition is satisfied. When the first condition is not satisfied and the second condition is satisfied, the transmission terminal may transmit the first image data whereas it does not have to transmit the first data. According to Configuration 3, the transmission terminal generates the predetermined image data as the first image data when one of the first condition and the second condition is satisfied. Since second data is not transmitted when the second condition is satisfied, depending on which of the first condition and the second condition is satisfied, the reception terminal can show an image differently.

(Configuration 4) In Configuration 3, the second condition may be a condition satisfied when not transmitting the image captured by the camera is selected. According to Configuration 4, the reception terminal can show an image in accordance with selection of not transmitting the image captured by the camera.

(Configuration 5) In any of Configurations 1 to 4, the generating the first image data may include generating, when the area including the part of the human body in the captured image is smaller than a predetermined image size, an image obtained by enlarging the area including the part of the human body, as the first image data. The state data may include second data indicating a size of the part of the human body included in the captured image. According to Configuration 5, the reception terminal can estimate quality of an image including the part of the human body based on the second data. The reception terminal can determine whether or not the received captured image can be shown in accordance with the estimated quality of the image.

(Configuration 6) In Configuration 5, an image size of the first image data may be predetermined. According to Configuration 6, since the size of the image exchanged between the transmission terminal and the reception terminal is predetermined, processing for generating image data and processing for showing the image can be simplified.

(Configuration 7) In Configuration 5 or 6, the generating the first image data may include generating the first image data such that a size of an area of the part of the human body included in the image corresponding to the first image data falls within a predetermined ratio range. According to Configuration 7, the size of the area where the part of the human body is shown can be uniform without being affected by positional relation between the camera and a person.

(Configuration 8) In any of Configurations 5 to 7, the second data may include a magnification factor. According to Configuration 8, the reception terminal can estimate quality of the image based on the magnification factor calculated in generation by the transmission terminal, of the image captured by the camera.

(Configuration 9) In any of Configurations 1 to 8, the part of the human body may be a face of a person. According to Configuration 9, the reception terminal can show an image including the face of the person.

(Configuration 10) In any of Configurations 1 to 9, the transmission terminal may transmit stream data in conformity with H.264 standard, the stream data including the first image data and the state data. The stream data may include a first NAL unit including the first image data and a second NAL unit including the state data. According to Configuration 10, the first image data and the state data can be transmitted in the same stream data by using the structure of the NAL unit defined under the H.264 standard.

(Configuration 11) According to one embodiment, a system that performs the information processing method according to any of Configurations 1 to 10 is provided.

(Configuration 12) According to one embodiment, an information processing apparatus that operates as the transmission terminal in the information processing method according to any of Configurations 1 to 10 is provided.

(Configuration 13) According to one embodiment, a computer program that causes a computer to perform processing as the transmission terminal in the information processing method according to any of Configurations 1 to 10 is provided.

(Configuration 14) According to one embodiment, an information processing apparatus that operates as the reception terminal in the information processing method according to any of Configurations 1 to 10 is provided.

(Configuration 15) According to one embodiment, a computer program that causes a computer to perform processing as the reception terminal in the information processing method according to any of Configurations 1 to 10 is provided.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of a system according to the present embodiment.
Fig. 2 shows an exemplary illustrative non-limiting drawing illustrating an exemplary hardware configuration of a game device according to the present embodiment.
Fig. 3 shows an exemplary illustrative non-limiting drawing illustrating an exemplary hardware configuration of a distribution server according to the present embodiment.
Fig. 4 shows an exemplary illustrative non-limiting drawing illustrating an exemplary screen image shown on a display of the game device according to the present embodiment.
Figs. 5A to 5D show exemplary illustrative non-limiting drawings illustrating exemplary display modes of a captured image shown on the display of the game device according to the present embodiment.
Figs. 6A to 6D show exemplary illustrative non-limiting drawings illustrating exemplary processing for generating captured image data in a transmission terminal in the system according to the present embodiment.
Fig. 7 shows an exemplary illustrative non-limiting drawing illustrating an exemplary data structure of transmission data in the system according to the present embodiment.
Fig. 8 shows an exemplary illustrative non-limiting drawing illustrating an exemplary software configuration in the transmission terminal in the system according to the present embodiment.
Fig. 9 shows an exemplary illustrative non-limiting drawing illustrating an exemplary flowchart showing a processing procedure in the transmission terminal in the system according to the present embodiment.
Fig. 10 shows an exemplary illustrative non-limiting drawing illustrating an exemplary software configuration in a reception terminal in the system according to the present embodiment.
Fig. 11 shows an exemplary illustrative non-limiting drawing illustrating an exemplary flowchart showing a processing procedure in the reception terminal in the system according to the present embodiment.
Figs. 12A to 12C show exemplary illustrative non-limiting drawings illustrating exemplary user interface screens in the reception terminal in the system according to the present embodiment.

### DETAILED DESCRIPTION

The present embodiment will be described in detail with reference to the drawings. The same or corresponding elements in the drawings have the same reference characters allotted and description thereof will not be repeated.

### [A. Exemplary System Configuration]

An exemplary configuration of a system according to the present embodiment will initially be described.

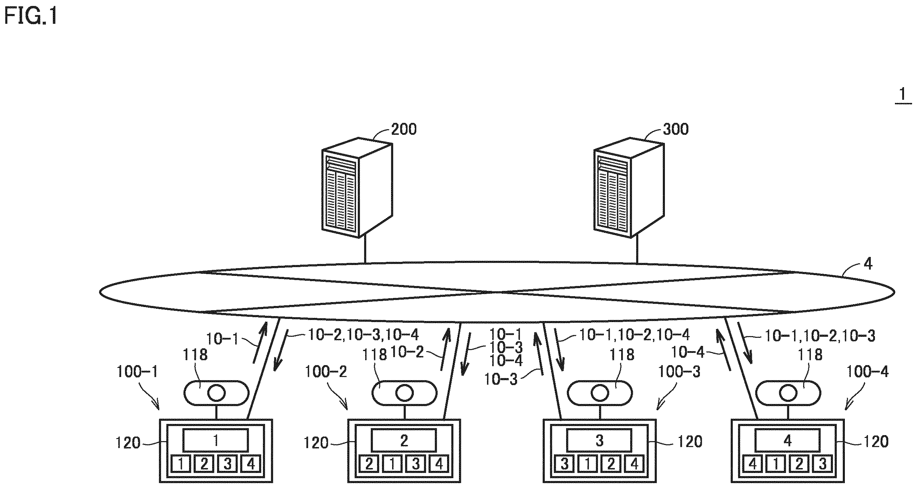

Referring to Fig. 1, a system 1 includes one or more game devices 100. Game device 100 is an exemplary information processing apparatus. Fig. 1 shows an exemplary configuration of system 1 including four game devices 100. When each of a plurality of game devices 100 should be specified in the description below, a sub number will be given for distinction (for example, game devices 100-1, 100-2, 100-3, and 100-4 shown in Fig. 1).

Each game device 100 can transmit image data generated by a game program or the like executed therein to another game device 100. Each game device 100 can receive image data transmitted from another game device 100 and show an image based on the received image data on a display 120 thereof.

The term "distribution" herein encompasses processing for transmission of data by at least one game device 100 (an exemplary information processing apparatus) to one or more other game devices 100. A scheme to transmit data from certain game device 100 to another game device 100 includes a scheme to transmit data through one or more relay entities (for example, a distribution server 200) and a scheme to directly transmit data to a reception terminal (for example, P2P or the like). Data to be transmitted may include various types of data in addition to image data.

Processing relating to distribution includes processing for reception of data by at least one game device 100 from at least another one game device 100.

For the sake of convenience of description, game device 100 that transmits image data to another game device 100 will also be referred to as a "transmission terminal" below, and game device 100 that receives image data from another game device 100 will also be referred to as a "reception terminal" below. A single game device 100 may fall under both of the transmission terminal and the reception terminal. Therefore, system 1 includes at least one transmission terminal and at least one reception terminal. System 1 can also be referred to as a distribution system.

The term "image data" herein encompasses data of moving images and data of one or more still images.

In an exemplary configuration shown in Fig. 1, game device 100-1 transmits transmission data 10-1 including image data generated thereby to one or more other game devices 100 and receives transmission data 10-2 to 10-4 transmitted by one or more other game devices 100. Game device 100-1 shows on display 120, an image including an image reproduced based on transmission data 10-2 to 10-4. Game devices 100-2 to 100-4 perform processing similar to that performed by game device 100-1.

In Fig. 1, numbers "1" to "4" in images shown on displays 120 of game devices 100-1 to 100-4 mean images generated by game programs running in game devices 100-1 to 100-4, respectively. As will be described later, for example, of images shown on display 120 of game device 100-1, an image labeled with "1" above and an image labeled with "1" below do not have to exactly be the same, and they may be different in image quality from each other, or a different image may be superimposed.

Camera 118 is available in at least one of one or more game devices 100. In the exemplary configuration shown in Fig. 1, each of game devices 100-1 to 100-4 can use camera 118. Transmission data 10 transmitted by game device 100 may include captured image data generated based on an image captured by camera 118.

System 1 further includes a distribution server 200 and a management server 300. One or more game devices 100, distribution server 200, and management server 300 are connected to a network 4.

Distribution server 200 relays data transmitted by game device 100. More specifically, distribution server 200 receives transmission data 10 from one or more game devices 100 and transmits one or more pieces of received transmission data 10 to one or more game devices 100.

Management server 300 is responsible for management necessary for distribution by one or more game devices 100. For example, management server 300 may determine one or more game devices 100 which are to participate in certain distribution. Management server 300 may determine a user account permitted to participate in distribution or may determine an identification number of game device 100 permitted to participate in distribution. In the former case, a user associated with the determined user account is permitted to participate in distribution. In the latter case, game device 100 provided with the determined identification number is permitted to participate in distribution.

Distribution server 200 and management server 300 may be implemented as a single physical server. System 1 may include a plurality of distribution servers 200 or may include a plurality of management servers 300. Distribution server 200 and management server 300 do not have to be separate in their function. Distribution server 200 and management server 300 may be virtual servers.

In the description below, one or more game devices 100 (or users) as a whole that participate in certain distribution are referred to as a "distribution group." The distribution group may dynamically be generated in response to a request from at least one game device 100 or may be generated in advance. Each of game devices 100 belonging to a certain distribution group can receive an image from another game device 100 (that is, can be a reception terminal). At least one of game devices 100 belonging to the distribution group can transmit image data to another game device 100 (that is, can be a distribution terminal).

An upper limit (which is also referred to as an "upper limit number of participants" below) may be set for the number of game devices 100 belonging to the same distribution group. The upper limit number of participants may be set, for example, to twelve. An upper limit (which is also referred to as an "upper limit number of distributors" below) may be set also for the number of game devices 100 (transmission terminals) that can distribute image data to another game device 100 in the same distribution group. The upper limit number of distributors may be set, for example, to four.

### [B. Exemplary Hardware Configuration]

An exemplary hardware configuration of each apparatus included in system 1 according to the present embodiment will now be described.

### (b1: Game Device 100)

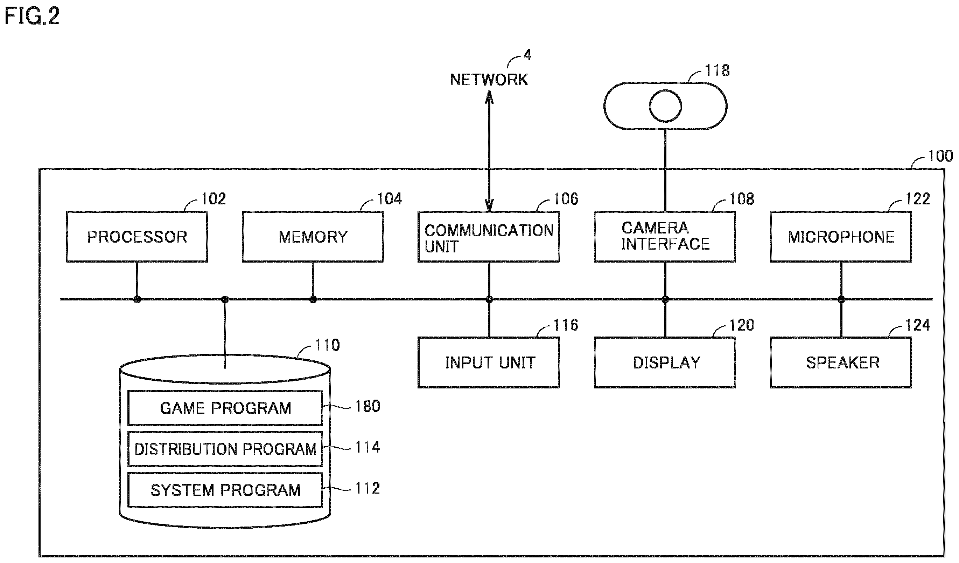

Game device 100 is a kind of computer. Referring to Fig. 2, game device 100 includes, for example, one or more processors 102, one or more memories 104, a communication unit 106, a camera interface 108, a storage 110, an input unit 116, display 120, a microphone 122, and a speaker 124.

Processor 102 is a processing entity for performing processing in game device 100. Processor 102 includes, for example, a central processing unit (CPU), a graphics processing unit (GPU), or the like. Processor 102 develops a program stored in storage 110 on memory 104 and executes the same.

Memory 104 is a volatile storage medium accessible by processor 102, and it includes, for example, a dynamic random access memory (DRAM), a static random access memory (SRAM), or the like.

Storage 110 is a non-volatile storage medium accessible by processor 102, and it includes, for example, a flash memory, a hard disk, or the like. Storage 110 may include, for example, a storage medium attachable to and removable from game device 100, such as a cartridge or an optical disc.

For example, a system program 112, a distribution program 114, and a game program 180 are stored in storage 110.

System program 112 includes a computer readable instruction for hardware control of game device 100, provision of a program execution environment, or the like.

Distribution program 114 includes a computer readable instruction for communication processing for distribution, processing necessary for image capture by camera 118, or the like.

Game program 180 is an exemplary application program and includes a computer readable instruction for execution of a game.

The term "processor" herein encompasses at least processing circuitry that performs processing in accordance with a computer readable instruction, such as a CPU or a GPU, and hard-wired circuitry such as an application specific integrated circuit (ASIC) or a field programmable gate array (FPGA).

The term "memory" herein encompasses at least memory 104 and storage 110.

In game device 100, a system on chip (SoC) in which functions of the processor, the memory, and the like are integrated may be adopted. In this case, the processor and the memory are located at the same SoC (integrated circuit). Therefore, the terms "processor" and "memory" herein encompass configurations independent of each other and an integrated configuration.

Communication unit 106 transmits and receives data to and from another game device 100, distribution server 200, management server 300, or the like over network 4. Connection of communication unit 106 to network 4 may be wired connection or wireless connection.

Camera interface 108 transmits and receives data to and from camera 118. Connection of camera interface 108 to camera 118 may be wired connection or wireless connection.

For wired connection of communication unit 106 and camera interface 108, for example, universal serial bus (USB) connection, parallel connection, or the like may be adopted. For wireless communication, for example, Bluetooth^{®}, ZigBee^{®}, wireless LAN (IEEE 802.11), or the like may be adopted.

Input unit 116 accepts a user operation. Input unit 116 includes, for example, a keyboard, a mouse, a game controller, a button, a cross-shaped key, and/or the like. Input unit 116 may be an interface with an apparatus (for example, a game controller) configured to accept a user operation. In other words, the apparatus configured to accept a user operation may be located outside game device 100.

Display 120 shows an image or a video image generated as a result of processing by processor 102. Display 120 includes, for example, a liquid crystal display (LCD), an organic EL display, or the like. Display 120 may be located outside game device 100. In this case, game device 100 may include an interface circuit with display 120.

Microphone 122 is arranged at a housing or the like of game device 100 and collects voice and sound to generate an audio signal. Speaker 124 is arranged at the housing or the like of game device 100 and generates voice and sound from an audio signal. At least one of microphone 122 and speaker 124 may be located outside game device 100.

Camera 118 generates camera data (moving image data or still image data) resulting from image capture of a subject, in accordance with a command from game device 100 or a predetermined condition.

Camera 118 includes an image capture element such as a charge-coupled device (CCD) image sensor or a complementary metal oxide semiconductor (CMOS) image sensor. A lens may be arranged in a stage preceding the image capture element.

Camera 118 may be, for example, a camera for video chat. Camera 118 may be a dedicated camera connectable only to a specific device or a general-purpose camera connectable to any device.

Camera 118 may be connectable to game device 100 through a wire or wirelessly, or may be incorporated in game device 100. A plurality of cameras 118 may be connectable to game device 100.

Though game device 100 is exemplified as an exemplary information processing apparatus, the information processing apparatus may be, for example, a personal computer, a television, a smartphone, a tablet, or the like.

### (b2: Distribution Server 200)

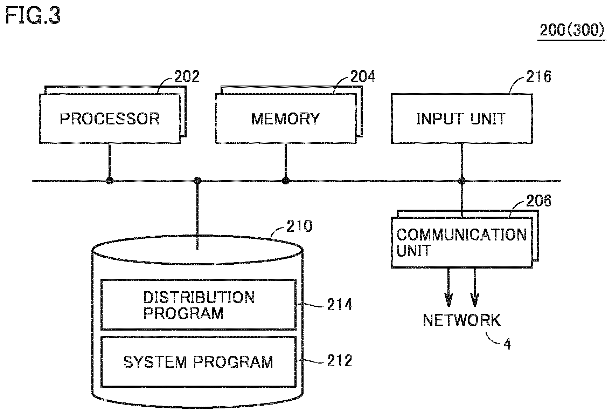

Referring to Fig. 3, distribution server 200 includes, for example, one or more processors 202, one or more memories 204, one or more communication units 206, a storage 210, and an input unit 216.

Processor 202 is a processing entity for performing processing in distribution server 200. Processor 202 includes, for example, a CPU, a GPU, or the like. Processor 202 develops a program stored in storage 210 on memory 204 and executes the same.

Memory 204 is a volatile storage medium accessible by processor 202, and it includes, for example, a DRAM, a SRAM, or the like.

Storage 210 is a non-volatile storage medium accessible by processor 202, and it includes, for example, a hard disk, a flash memory, or the like. For example, a system program 212, a distribution program 214, and the like are stored in storage 210.

System program 212 includes a computer readable instruction for hardware control of distribution server 200, provision of a program execution environment, or the like.

Distribution program 214 includes a computer readable instruction for performing relaying processing or the like necessary for distribution as will be described later.

Communication unit 206 transmits and receives data to and from game device 100, management server 300, or the like over network 4. Connection of communication unit 206 to network 4 may be wired connection or wireless connection.

Input unit 216 accepts a user operation. Input unit 216 includes, for example, a keyboard, a mouse, and/or the like.

### (b3: Management Server 300)

Since an exemplary hardware configuration of management server 300 is similar to the exemplary hardware configuration of distribution server 200 shown in Fig. 3, detailed description will not be repeated.

A distribution program stored in a storage of management server 300 may include a computer readable instruction for performing processing necessary for management of distribution as will be described later.

### [C. Exemplary Screen Image]

An exemplary screen image in distribution in system 1 according to the present embodiment will now be described.

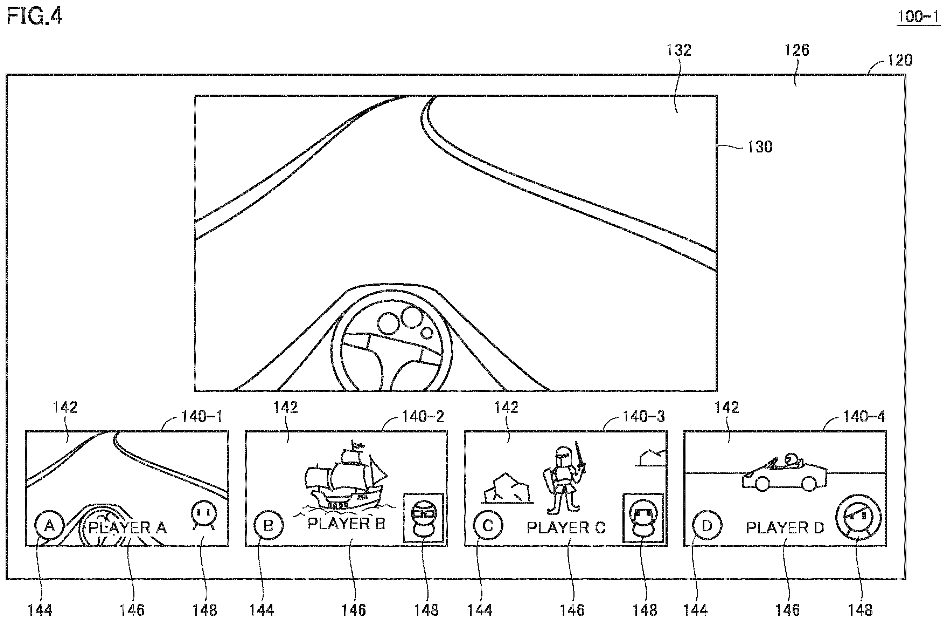

An exemplary screen image 126 shown on display 120 of game device 100-1 according to the present embodiment will be described with reference to Fig. 4. Fig. 4 shows exemplary screen image 126 of game device 100-1 belonging to the distribution group shown in Fig. 1. Game device 100-1 operates at least as the reception terminal.

Screen image 126 includes a main image 130 and distributed display images 140-1 to 140-4 (which may also collectively be referred to as a "distributed display image 140" below).

Each of distributed display images 140-2 to 140-4 is outputted based on image data distributed by the transmission terminal belonging to the distribution group. In the present embodiment, game device 100-1 itself is the transmission terminal. Therefore, one distributed display image 140-1 is outputted based on the image data generated in game device 100-1. Each of other game devices 100-2 to 100-4 shows distributed display image 140 the same as distributed display image 140-1 based on transmission data 10 distributed by game device 100-1. A position of display of distributed display image 140 may be different for each game device 100. In an example where game device 100-1 is not the transmission terminal, all of distributed display images 140-1 to 140-4 are outputted based on image data distributed by other transmission terminals.

Each of distributed display images 140-1 to 140-4 includes a game image 142, a user icon 144 of the user of the transmission terminal, a user name 146 of the user of the transmission terminal, and a camera image 148. At least one of user icon 144 and user name 146 does not have to be shown. At least one of game image 142 and camera image 148 does not have to be shown in some cases. In addition to or instead of these images, another image may be shown.

Game image 142 is outputted based on game image data generated by game program 180 running in the transmission terminal. The user of the transmission terminal may be permitted to set whether or not to distribute game image data. Game image 142 is not limited to the image generated by the running game program but may be any image generated in the transmission terminal. For example, game image 142 may be an image of a menu screen shown on display 120 of the transmission terminal or an image generated by distribution program 114 of the transmission terminal.

User icon 144 may be set or generated in advance by the user of the transmission terminal. User name 146 is shown based on information on the user (for example, a user account name) of the transmission terminal. An image to be shown as user icon 144 and text to be shown as user name 146 may be received by game device 100 or generated by game device 100 based on attribute information or the like of the user account who participates in the distribution group.

Camera image 148 is based on captured image data generated as a result of image capture by camera 118 connected to the transmission terminal. The user of the transmission terminal may be permitted to set whether or not to distribute the captured image data. For example, when the user of the transmission terminal does not permit distribution of the captured image data, a predetermined default image (for example, a black image) may be shown as camera image 148. Permission of distribution of the captured image data at the transmission terminal may be set by the user who is using the transmission terminal, another user (for example, a parent), or the transmission terminal or a running application. In an example where camera 118 is not connected to the transmission terminal, nothing is shown in an area where camera image 148 is to be shown, and game image 142 which is a background may be shown. Processing for showing camera image 148 or the like will be described later.

Main image 130 includes a game image 132. Game image 132 may be outputted based on game image data generated by game program 180 executed in game device 100 (subject game device). In this case, while the user of game device 100 watches a status of a game (game image 142) (by another player) at the transmission terminal, the user himself/herself also can enjoy the game.

Game image 132 included in main image 130 may be higher in resolution (or the number of pixels) or frame rate than game image 142 included in distributed display image 140.

### [D. Camera Image 148]

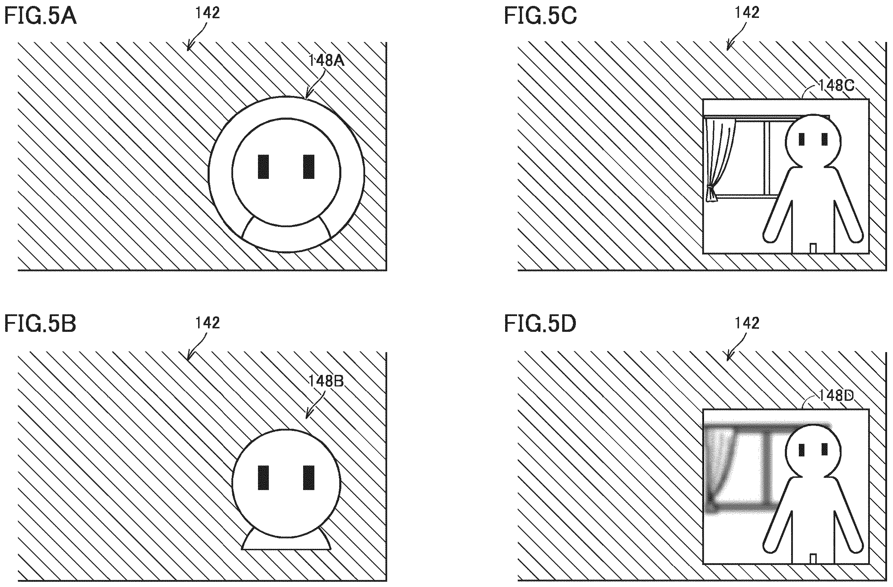

An exemplary camera image 148 in distributed display image 140 will now be described with reference to Figs. 5A to 5D. Camera image 148 is generated based on the captured image data included in transmission data 10. Figs. 5A to 5D show with hatching, an area where game image 142 is to be shown, so as to clarify a manner of display of camera image 148.

Though a display mode of camera image 148 is set on a transmission terminal side in the present embodiment, it may be set on a reception terminal side.

Fig. 5A shows exemplary face mode display 148A. Face mode display 148A includes an image in a predetermined shape, with a face of a user being substantially centered, in the image resulting from image capture of the user. The user of the reception terminal readily checks a facial expression or the like of a player who is playing a game. The predetermined shape may be, for example, one of a circular shape, an elliptical shape, and a polygonal shape. An image obtained by cutting out a face of a person and a portion around the face is shown superimposed on game image 142, based on a position of the face of the person.

Fig. 5B shows exemplary contour cut-out mode display 148B. A contour cut-out mode display 148B includes an image cut out in accordance with a contour of the human body.

Fig. 5C shows exemplary non-process mode display 148C. Non-process mode display 148C includes an image resulting from image capture by camera 118 of the transmission terminal, as it is. Therefore, the captured image may include as a subject, an object located in the background of the user, in addition to the user. The image captured by camera 118 of the transmission terminal is shown superimposed on game image 142.

Fig. 5D shows exemplary background blur mode display 148D. Background blur mode display 148D includes an image where an area other than a human body is blurred away, in the image resulting from image capture by camera 118 of the transmission terminal.

### [E. Exemplary Processing for Generating Captured Image Data]

Exemplary processing for generating the captured image data to be used for face mode display 148A will now be described.

The transmission terminal subjects camera data outputted from camera 118 to image processing to generate captured image data. An image size of the captured image data may be predetermined. The transmission terminal may specify a part of the human body included in the image (camera data) captured by camera 118 in generating the captured image data. For example, the "part of the human body" may be a face of a person as shown in Fig. 5A.

When face mode display 148A shown in Fig. 5A is selected, the transmission terminal detects the face of the person included in the captured image. A known face recognition technique may be used for detection of the face of the person. The transmission terminal extracts partial image data containing the detected face of the person from the camera data and generates captured image data 111 from the extracted partial image data.

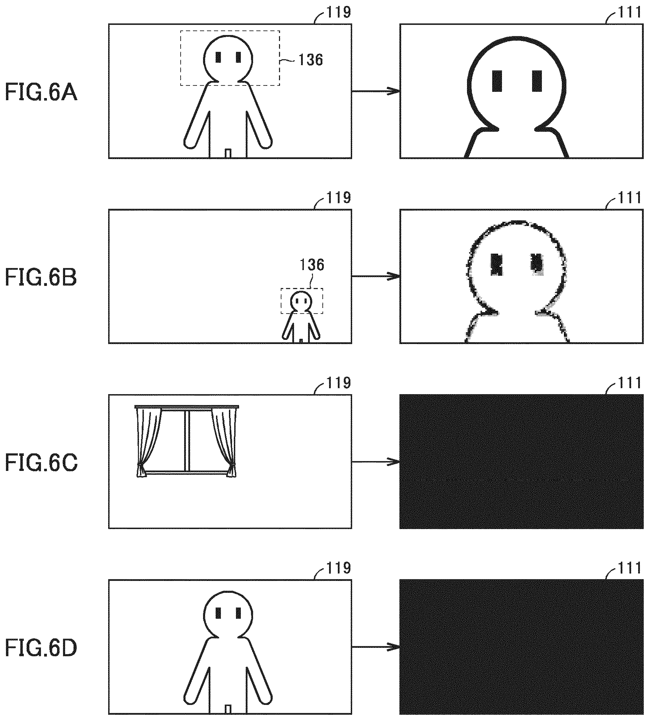

Exemplary processing for generating captured image data 111 in the transmission terminal in system 1 according to the present embodiment will be described with reference to Figs. 6A to 6D.

Fig. 6A shows an example where the face of the person is included in a field of view of camera 118. The transmission terminal detects the face of the person included in camera data 119 outputted from camera 118 and determines an area 136 including the detected face of the person. The transmission terminal may adjust (reduce/enlarge the size of) the image of determined area 136 to match with the image size set in advance of captured image data 111.

Fig. 6B shows another example where the face of the person is included in the field of view of camera 118. As in Fig. 6A, the transmission terminal detects the face of the person included in camera data 119 and determines area 136 including the detected face of the person. The transmission terminal enlarges determined area 136 to a predetermined image size to generate captured image data 111. Since the person is located at a position distant from camera 118 in the example shown in Fig. 6B, area 136 is smaller as compared with the image size of camera data 119. Therefore, area 136 should be enlarged and image quality of the face of the person included in captured image data 111 may be lower.

In system 1 according to the present embodiment, transmission data transmitted by the transmission terminal may include information that allows determination as to lowering in image quality of the face of the person in captured image data 111. The reception terminal can thus determine whether or not to generate camera image 148 from received captured image data 111. For example, when image quality of the face of the person has lowered, the reception terminal may notify that camera image 148 cannot be shown because the user of the transmission terminal is too distant from camera 118.

Fig. 6C shows an example where the face of the person is not included in the field of view of camera 118. The transmission terminal is unable to detect the face of the person in camera data 119. The transmission terminal may perform any processing when it fails in detection. For example, a default image (for example, a black image) is outputted as captured image data 111. In the description below, the default image as shown in Fig. 6C is also referred to as a "mute image" in the sense that the captured image is not shown on the reception terminal. The mute image may be any image, without being limited to an image all pixels of which are black. For example, the mute image may be an image all pixels of which are white.

Fig. 6D shows exemplary processing when distribution of the image captured by camera 118 is not permitted. The transmission terminal outputs the default image as captured image data 111 because distribution is not permitted. In this case again, the default image to be outputted as captured image data 111 may be the mute image.

In other words, when the face of the person is undetectable from camera data 119 and when distribution of captured image data 111 is not permitted, the mute image may be outputted as captured image data 111 in each case. Therefore, the reception terminal may not be able to determine the reason why the mute image is transmitted when it receives transmission data 10 including the mute image.

In system 1 according to the present embodiment, the transmission data transmitted by the transmission terminal may include information indicating whether or not the face of the person is included in the field of view of camera 118. In other words, the transmission data may include information indicating whether or not the captured image includes the face of the person. The reception terminal can thus determine that the mute image is transmitted because the face of the person is not present in the field of view of camera 118 of the transmission terminal. In this case, the transmission terminal may notify that the image of the user of the transmission terminal cannot be shown because there is no face of the person in the field of view of camera 118 of the transmission terminal.

When the face of the person cannot be detected from camera data 119 in the example where contour cut-out mode display 148B shown in Fig. 5B is selected, determination of the area to be cut out cannot be made and hence there is no effective camera image 148. Therefore, game image 142 may be shown without being hidden by camera image 148. In the example where non-process mode display 148C shown in Fig. 5C is selected, the transmission terminal may output camera data 119 as it is as captured image data 111. In the example where background blur mode display 148D shown in Fig. 5D is selected, the transmission terminal may generate captured image data 111 with an area other than the human body included in camera data 119 being blurred away.

### [F. Transmission Data 10]

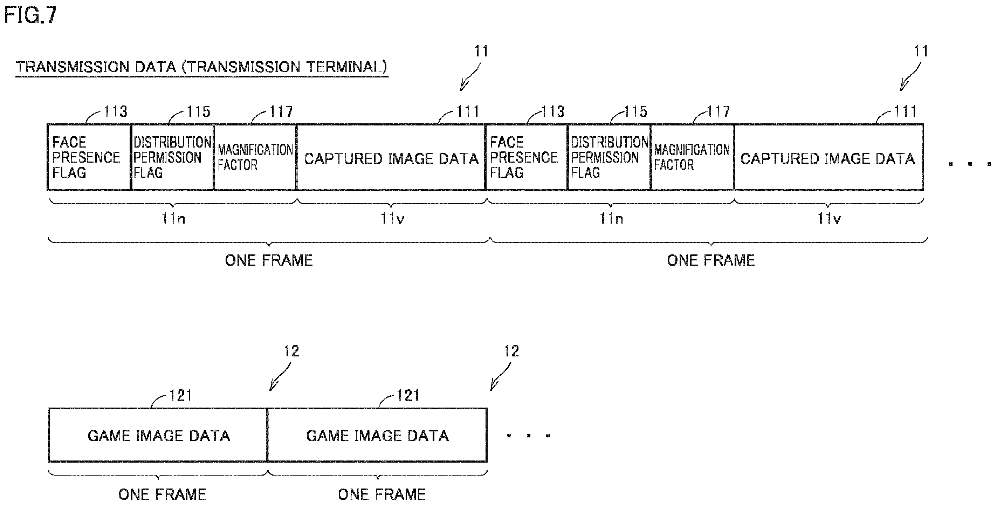

Transmission data 10 transmitted by the transmission terminal will now be described with reference to Fig. 7.

Transmission data 10 may be, for example, in a data format suitable for streaming. Transmission data 10 includes, for example, captured image stream data 11 and game image stream data 12.

Captured image stream data 11 includes a face presence flag 113, a distribution permission flag 115, a magnification factor 117, and captured image data 111.

Face presence flag 113 is exemplary information indicating whether or not captured image data 111 includes the face of the person. For example, when captured image data 111 includes the face of the person, "1" is set in face presence flag 113, and otherwise, "0" is set in face presence flag 113.

Distribution permission flag 115 is exemplary information indicating whether or not distribution of the image generated by image capture by camera 118 is permitted. For example, when distribution of the image generated by image capture by camera 118 is permitted, "1" is set in distribution permission flag 115, and otherwise, "0" is set in distribution permission flag 115.

Magnification factor 117 indicates a ratio of a size of captured image data 111 to a size of area 136 set in camera data 119. Since the image size of captured image data 111 is predetermined, magnification factor 117 is also an indicator indicating the size of the face of the person (a part of the human body) included in the captured image. Magnification factor 117 is exemplary information for determination as to whether or not image quality of the face of the person included in captured image data 111 has lowered. Higher magnification factor 117 means lower image quality of the face of the person in captured image data 111. Magnification factor 117 is thus information that can be used for determination as to whether or not the face of the person is shown in a grainy state.

Each of face presence flag 113 and magnification factor 117 may be transmitted only when it is necessary.

Captured image data 111 is generated in image processing as described above.

Game image stream data 12 includes game image data 121 necessary for generation of game image 142 of distributed display image 140.

Captured image stream data 11 may be generated in conformity with H.264 (MPEG-4 AVC) standard. Game image stream data 12 may be generated also in conformity with the H.264 standard. In other words, the transmission terminal may transmit stream data in conformity with the H.264 standard, which includes captured image data 111 and state data (face presence flag 113, distribution permission flag 115, and magnification factor 117) based on a state of capturing the human body in the captured image. Similarly, the transmission terminal may transmit stream data in conformity with the H.264 standard including game image data 121.

The stream data in conformity with the H.264 standard is a series of data referred to as a network abstraction layer (NAL) unit. The NAL unit can broadly be categorized into a video coding layer (VCL)-NAL unit including video image information and a non-VCL-NAL unit not including video image information.

In an example where captured image stream data 11 is generated in conformity with the H.264 standard, for example, state data (face presence flag 113, distribution permission flag 115, and magnification factor 117) in a corresponding frame is stored, for example, in one NAL unit (non-VCL-NAL unit) (stream data 11n). One frame of captured image data 111 is stored in one subsequent NAL unit (VCL-NAL unit) (stream data 11v).

In other words, one frame of captured image stream data 11 may be made up of stream data 11v which is one VCL-NAL unit including captured image data 111 and stream data 11n which is one non-VCL-NAL unit including the state data. One frame of game image stream data 12, on the other hand, may be made up of one VCL-NAL unit including game image data 121. A part or the entirety of the state data may be included in the VCL-NAL unit.

Each of the VCL-NAL unit including captured image data 111 and the VCL-NAL unit including game image data 121 may include one of a key frame (a frame not subjected to interframe compression) and a differential frame (a delta frame).

### [G. Exemplary Processing for Distribution]

Exemplary processing for distribution in game device 100 will now be described.

### (g1: Transmission Terminal)

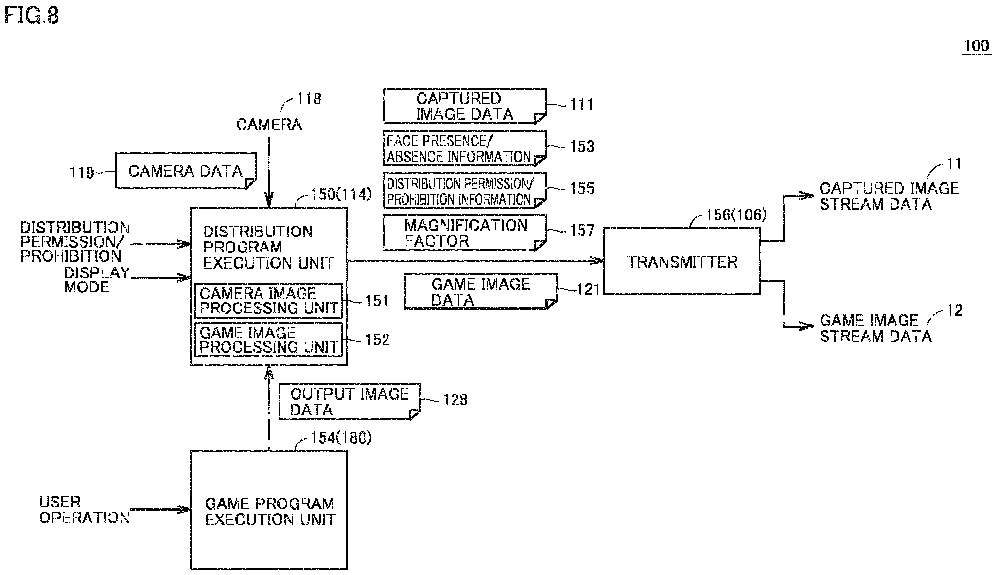

An exemplary software configuration in the transmission terminal of system 1 according to the present embodiment will be described with reference to Fig. 8. Fig. 8 shows an exemplary software configuration with attention being paid to an example where game device 100 operates as the transmission terminal, and it does not show other processing modules for the sake of convenience of description.

Game device 100 that operates as the transmission terminal includes a distribution program execution unit 150, a game program execution unit 154, and a transmitter 156.

Distribution program execution unit 150 is implemented by execution of distribution program 114 by processor 102 of game device 100 in the environment where the processor executes system program 112. Distribution program execution unit 150 includes a camera image processing unit 151 and a game image processing unit 152.

Camera image processing unit 151 generates captured image data 111 based on an image (camera data 119) captured by camera 118. Camera image processing unit 151 generates captured image data 111 in accordance with whether or not distribution of captured image data 111 is permitted (distribution permission/prohibition) and the display mode of camera image 148.

As shown in Fig. 6A described above, when the image captured by camera 118 includes the face of the person (an exemplary part of the human body), camera image processing unit 151 generates as captured image data 111, an image of area 136 which is a partial area of the captured image and includes the part of the human body.

In order to generate captured image data 111 the image size of which is predetermined, camera image processing unit 151 may adjust the image size (reduce/enlarge the size) of partial image data corresponding to area 136 including the part of the person. For example, when area 136 including the part of the human body is smaller than a predetermined image size of captured image data 111, camera image processing unit 151 may generate an image resulting from enlargement of area 136, as captured image data 111.

A position and a size of area 136 are determined in accordance with the detected face of the person. Camera image processing unit 151 generates captured image data 111, for example, such that a size of an area of the face of the person (an example of the part of the human body) included in the image of area 136 (corresponding to captured image data 111) falls within a predetermined ratio range. In other words, camera image processing unit 151 determines the position and the size of area 136 such that an area other than the detected face of the person is not excessively larger than the face of the person.

Camera image processing unit 151 outputs state data based on the state of capturing the human body in the captured image. More specifically, camera image processing unit 151 outputs face presence/absence information 153, distribution permission/prohibition information 155, and a magnification factor 157 determined in processing for generating captured image data 111.

Face presence/absence information 153 is information for determining a value of face presence flag 113 described above. Face presence/absence information 153 indicates whether or not captured image data 111 includes the face of the person.

Distribution permission/prohibition information 155 is information for determining a value of distribution permission flag 115 described above.

Magnification factor 157 is information for determining a value of magnification factor 117 described above.

Game program execution unit 154 is implemented by execution of game program 180 by processor 102 of game device 100 in the environment where the processor executes system program 112. Game program execution unit 154 has a game proceed in accordance with a user operation in accordance with a computer readable instruction included in game program 180. Game program execution unit 154 outputs output image data 128 as the image data of the game that is being executed. Output image data 128 has resolution (or the number of pixels) and the frame rate at which images are shown in play of the game by the user at game device 100.

Game image processing unit 152 generates game image data 121 from output image data 128. Game image processing unit 152 generates game image data 121, for example, by downsampling or down-converting output image data 128. Game image processing unit 152 may be implemented by a function or the like provided by system program 112.

Transmitter 156 is implemented by using communication unit 106, by execution of system program 112 by processor 102 of game device 100. At least a part of processing performed by transmitter 156 may be in accordance with distribution program 114. Transmitter 156 generates and transmits captured image stream data 11 based on captured image data 111, face presence/absence information 153, distribution permission/prohibition information 155, and magnification factor 157.

Transmitter 156 generates and transmits game image stream data 12 based on game image data 121.

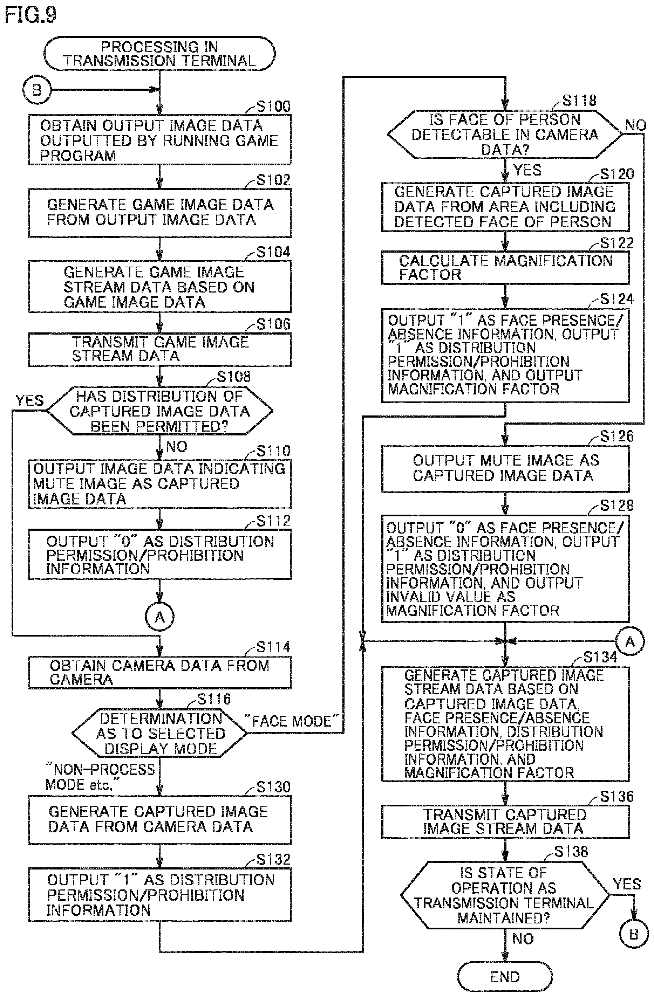

An exemplary processing procedure in the transmission terminal in system 1 according to the present embodiment will be described with reference to Fig. 9. Each step shown in Fig. 9 is performed, for example, by execution of system program 112 and distribution program 114 by processor 102 of game device 100 that operates as the transmission terminal. Processor 102 of game device 100 is assumed to execute also game program 180.

The transmission terminal is assumed to perform processing for participating in a distribution group in advance to belong to a certain distribution group and to operate as the transmission terminal in the distribution group.

Referring to Fig. 9, the transmission terminal obtains output image data 128 outputted by running game program 180 (step S100). Game device 100 generates game image data 121 from output image data 128 (step S102).

The transmission terminal generates game image stream data 12 based on game image data 121 (step S104) and transmits generated game image stream data 12 (step S106).

The transmission terminal determines whether or not distribution of captured image data 111 has been permitted (step S108).

When distribution of captured image data 111 has not been permitted (NO in step S108), the transmission terminal outputs the image data indicating the mute image as captured image data 111 (step S110), and outputs "0" indicating that distribution of captured image data 111 is not permitted, as distribution permission/prohibition information 155 (step S112). The transmission terminal does not have to output face presence/absence information 153 and magnification factor 157.

A condition that distribution of captured image data 111 is not permitted means a condition satisfied when not transmitting the image captured by camera 118 is selected. When distribution of captured image data 111 is not permitted, the transmission terminal (camera image processing unit 151) outputs the mute image which is exemplary predetermined image data, as captured image data 111. When distribution of captured image data 111 is permitted, a later-described condition is not satisfied and the transmission terminal does not have to transmit face presence/absence information 153 indicating that the captured image does not include the part of the human body.

When distribution of captured image data 111 has been permitted (YES in step S108), the transmission terminal obtains camera data 119 from camera 118 (step S114).

The transmission terminal makes determination as to the selected display mode (step S116).

When the face mode has been selected ("face mode" in step S116), the transmission terminal determines whether or not the face of the person is detectable in camera data 119 (step S118).

When the face of the person is detectable (YES in step S118), the transmission terminal generates captured image data 111 from area 136 including the detected face of the person (step S120). The transmission terminal calculates the magnification factor in generation of captured image data 111 from the partial image data corresponding to area 136 (step S122). The transmission terminal outputs "1" indicating that the face of the person is included as face presence/absence information 153, outputs "1" indicating permission of distribution of captured image data 111 as distribution permission/prohibition information 155, and outputs magnification factor 157 in generation of captured image data 111 from camera data 119 (step S124).

When the face of the person is undetectable (NO in step S118), the transmission terminal outputs the mute image as captured image data 111 (step S126). A condition that the face of the person is undetectable in camera data 119 is an exemplary condition satisfied when the captured image (camera data 119) does not include the part of the human body. When such a condition is satisfied, the transmission terminal (camera image processing unit 151) outputs, for example, the mute image as captured image data 111.

The transmission terminal outputs "0" indicating that the captured image does not include the face of the person as face presence/absence information 153, outputs "1" as distribution permission/prohibition information 155, and outputs an invalid value (for example, 0%, a negative value, or the like) as magnification factor 157 (step S128). The state data thus includes data indicating that the captured image does not include the part of the human body. Such data can also be concluded as meaning failure in detection of the part of the human body in the captured image.

When one of a non-process mode, a background blur mode, and a contour cut-out mode has been selected ("non-process mode etc." in step S116), the transmission terminal generates captured image data 111 from camera data 119 (step S130). The transmission terminal outputs "1" as distribution permission/prohibition information 155 (step S132). The transmission terminal does not have to output face presence/absence information 153 and magnification factor 157.

When the face mode has been selected, the transmission terminal may transmit information indicating the contour of the human body with some method. Alternatively, when the background blur mode has been selected, the transmission terminal blurs away an area other than the contour of the person in camera data 119.

The transmission terminal generates captured image stream data 11 based on captured image data 111, face presence/absence information 153, distribution permission/prohibition information 155, and magnification factor 157 (step S134) and transmits generated captured image stream data 11 (step S136). When face presence/absence information 153 and magnification factor 157 are not outputted, the transmission terminal does not have to incorporate face presence flag 113 and magnification factor 117 in captured image stream data 11.

The transmission terminal determines whether or not a state of operation as the transmission terminal is maintained (step S138). When the state of operation as the transmission terminal is maintained (YES in step S138), processing in step S100 or later is repeated. When the state of operation as the transmission terminal is no longer maintained (NO in step S138), the process ends.

The transmission terminal may provide information for supporting the user in accordance with a result of processing for generating captured image data 111 from camera data 119.

For example, when the face of the person included in camera data 119 is undetectable (NO in step S118), such a message that "move face to be accommodated in detection range" may be shown on display 120.

When magnification factor 117 calculated in step S122 exceeds a predetermined threshold value, such a message that "come closer to camera" may be shown on display 120 of the transmission terminal.

### (g2: Reception Terminal)

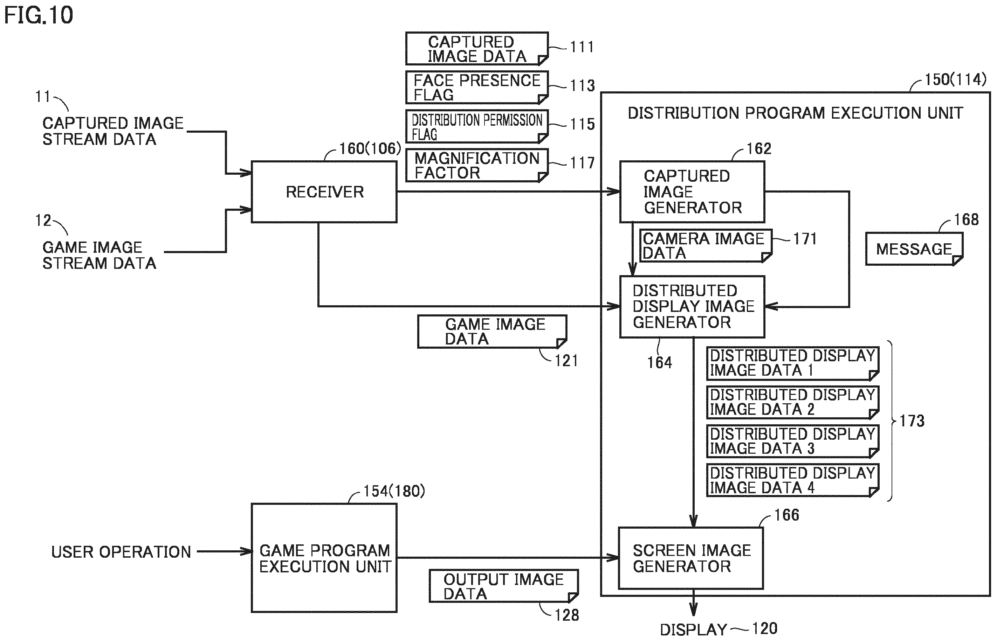

An exemplary software configuration in the reception terminal in system 1 according to the present embodiment will be described with reference to Fig. 10. Fig. 10 shows an exemplary software configuration with attention being paid to an example where game device 100 operates as the reception terminal, and it does not show other processing modules for the sake of convenience of description.

Referring to Fig. 10, game device 100 that operates as the reception terminal includes distribution program execution unit 150, game program execution unit 154, and a receiver 160.

Receiver 160 is implemented by using communication unit 106, by execution of system program 112 by processor 102 of game device 100. At least a part of processing performed by receiver 160 may be in accordance with distribution program 114. Receiver 160 receives captured image stream data 11 and game image stream data 12 from each of one or more transmission terminals.

Distribution program execution unit 150 is implemented by execution of distribution program 114 by processor 102 of game device 100 in the environment where the processor executes system program 112. Distribution program execution unit 150 includes a captured image generator 162, a distributed display image generator 164, and a screen image generator 166.

Captured image generator 162 generates camera image data 171 based on captured image data 111 included in captured image stream data 11. Captured image generator 162 determines processing for generating camera image data 171 based on face presence flag 113, distribution permission flag 115, and magnification factor 117. Captured image generator 162 may generate a message 168 based on face presence flag 113, distribution permission flag 115, and magnification factor 117.

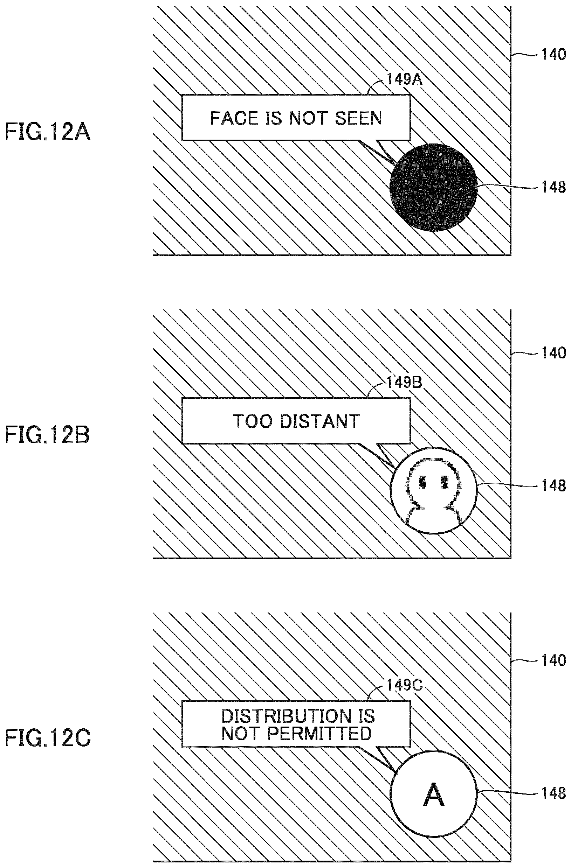

Distributed display image generator 164 generates distributed display image data 173 based on game image data 121 included in game image stream data 12 and camera image data 171. Distributed display image generator 164 has message 168 reflected on distributed display image data 173 as necessary (by way of example, messages 149A, 149B, and 149C shown in Figs. 12A to 12C which will be described later).

Game program execution unit 154 is similar to game program execution unit 154 shown in Fig. 8.

Screen image generator 166 has screen image 126 shown on display 120 based on output image data 128 and distributed display image data 173. Screen image generator 166 updates display contents of main image 130 based on output image data 128 and updates display contents of distributed display images 140-1 to 140-4 (see Fig. 4) based on distributed display image data 173.

When game device 100 is the transmission terminal and the reception terminal, it may update display contents of distributed display image 140 (for example, distributed display image 140-1 shown in Fig. 4) corresponding thereto based on captured image data 111 outputted from camera image processing unit 151 (see Fig. 8) and game image data 121 outputted from game image processing unit 152 (see Fig. 8).

Alternatively, when game device 100 is the transmission terminal and the reception terminal, it may update display contents of distributed display image 140 corresponding thereto based on captured image stream data 11 and game image stream data 12 which game device 100 transmits to another terminal.

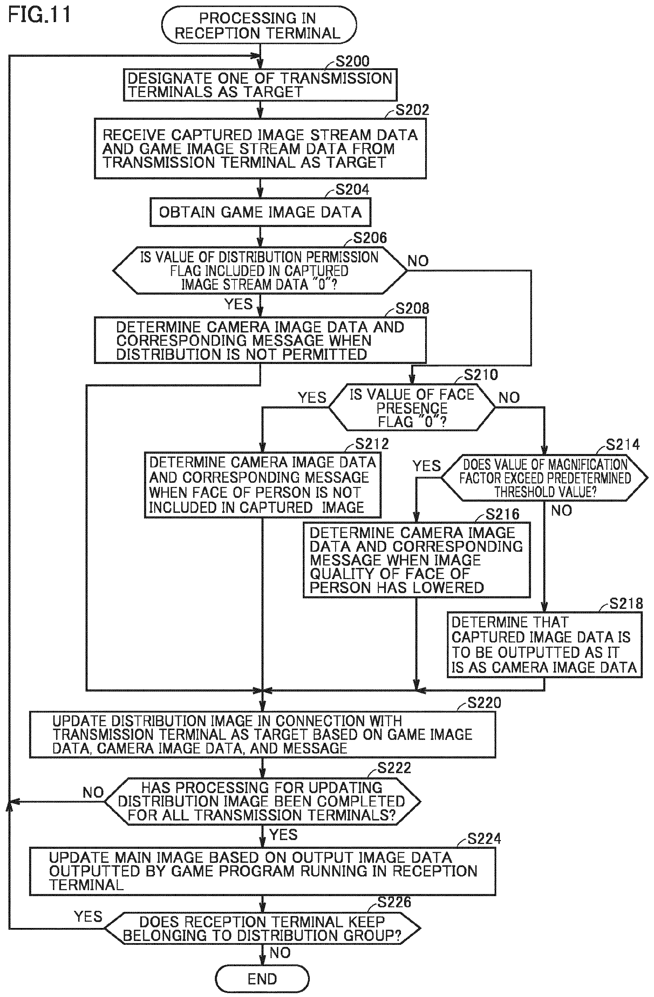

An exemplary processing procedure in the reception terminal in system 1 according to the present embodiment will be described with reference to Fig. 11. Each step shown in Figs. 12 and 13 is performed, for example, by execution of system program 112 and distribution program 114 by processor 102 of game device 100 that operates as the reception terminal. Processor 102 of game device 100 is assumed to execute also game program 180.

The reception terminal is assumed to perform processing for participating in a distribution group in advance to belong to a certain distribution group and to operate as the reception terminal in the distribution group.

Referring to Fig. 11, the reception terminal designates one of transmission terminals as the target (step S200) and receives captured image stream data 11 and game image stream data 12 from the transmission terminal as the target (step S202). Captured image stream data 11 and game image stream data 12 may be received independently of each other.

The reception terminal obtains game image data 121 included in game image stream data 12 from the transmission terminal as the target (step S204). The reception terminal determines whether or not a value of distribution permission flag 115 included in captured image stream data 11 from the transmission terminal as the target is "0" (that is, a value indicating that distribution of captured image data 111 is not permitted) (step S206). When the value of distribution permission flag 115 is "0" (YES in step S206), the reception terminal determines camera image data 171 in the case where distribution is not permitted and determines message 168 (for example, "distribution is not permitted") indicating that distribution is not permitted (step S208).

When the value of distribution permission flag 115 is not "0" (NO in step S206), the reception terminal determines whether or not a value of face presence flag 113 is "0" (that is, a value indicating that the captured image does not include the face of the person) (step S210). When the value of face presence flag 113 is "0" (YES in step S210), the reception terminal determines camera image data 171 in the case where the captured image does not include the face of the person and determines message 168 (for example, "face is not seen") indicating that the captured image does not include the face of the person (step S212).

When the value of face presence flag 113 is not "0" (NO in step S210), the reception terminal determines whether or not a value of magnification factor 117 has exceeded a predetermined threshold value (step S214). When the value of magnification factor 117 has exceeded the predetermined threshold value (YES in step S214), the reception terminal determines camera image data 171 in the case where image quality of the face of the person included in captured image data 111 has lowered and determines message 168 (for example, "too distant") indicating that the image quality of the face of the person included in captured image data 111 has lowered (step S216).

When the value of magnification factor 117 has not exceeded the predetermined threshold value (NO in step S214), the reception terminal determines to set captured image data 111 as it is as camera image data 171 (step S218). At this time, the reception terminal determines output of message 168 as not being necessary. When captured image stream data 11 does not include valid magnification factor 117 as well, determination that the value of magnification factor 117 has not exceeded the predetermined threshold value (NO in step S214) may be made.

The reception terminal updates distributed display image 140 in connection with the transmission terminal as the target, based on game image data 121 and determined camera image data 171 and message 168 (step S220). There may be no message 168.

The reception terminal determines whether or not processing for updating distributed display image 140 has been completed for all transmission terminals (step S222). When there is a transmission terminal for which processing for updating distributed display image 140 has not been completed (NO in step S222), processing in step S200 or later is repeated.

The reception terminal updates main image 130 based on output image data 128 outputted by game program 180 running therein (step S224).

The reception terminal determines whether or not it keeps belonging to the distribution group (step S226). When the reception terminal keeps belonging to the distribution group (YES in step S226), processing in step S200 or later is repeated. When the reception terminal no longer belongs to the distribution group (NO in step S226), the process ends.

When the reception terminal also serves as the transmission terminal, it may generate distributed display image 140 therefor based on camera data 119 outputted by camera 118 and a game image generated by game program 180 running therein, rather than captured image stream data 11 and game image stream data 12 transmitted thereby.

An exemplary user interface screen in the reception terminal in system 1 according to the present embodiment will be described with reference to Figs. 12A to 12C.

Referring to Fig. 12A, when the reception terminal determines that the captured image from the transmission terminal does not include the face of the person based on the value of face presence flag 113 included in transmission data 10 (after step S212 is performed), it may show message 149A such as "face is not seen" in association with camera image 148.

Referring to Fig. 12B, when the reception terminal determines that the image quality of the face of the person included in captured image data 111 of transmission data 10 has lowered based on the value of magnification factor 117 included in transmission data 10 (after step S216 is performed), it may show message 149B such as "too distant" in association with camera image 148.

Referring to Fig. 12C, when the reception terminal determines that distribution of captured image data 111 is not permitted based on the value of distribution permission flag 115 included in transmission data 10 (after step S208 is performed), it may show message 149C such as "distribution is not permitted" in association with camera image 148.

When messages 149A to 149C or the like are shown, camera image 148 generated based on captured image data 111 may be shown. For example, Fig. 12A corresponds to an example where captured image data 111 includes the mute image, and Fig. 12B corresponds to an example where captured image data 111 is an image low in quality. In Fig. 12B, instead of captured image data 111, the mute image may be shown as camera image 148. Further alternatively, in each of Figs. 12A to 12C, any image generated by the reception terminal may be shown as camera image 148. For example, as shown in Fig. 12C, an image on which information on a user (for example, a user account name) who operates the transmission terminal is reflected may be shown as camera image 148. Further alternatively, camera image 148 may not be shown. In this case, game image 142 is shown without being hidden by camera image 148.

Whether or not camera image 148 is shown, a type of the image shown as camera image 148, or the like may be determined or changed in accordance with an operation by the user of the reception terminal.

The reception terminal thus generates, based on the state data, distributed display image 140 to be shown on display 120, which includes camera image 148 based on captured image data 111 or camera image 148 based on other image data instead of captured image data 111. The reception terminal shows screen image 126 including one or more generated distributed display images 140.

Messages 149A to 149C may always be shown while distributed display image 140 is shown, or may be shown only while a predetermined condition is satisfied. For example, messages 149A to 149C may be shown in accordance with an operation to select camera image 148 performed by the user of the reception terminal.

Whether or not to show messages 149A to 149C, a condition for showing messages 149A to 149C, or the like may be determined or changed in accordance with an operation by the user of the reception terminal.

### [H. Modification]

Though the face of the person is described as an exemplary "part of the human body" in the description above, not only the face of the person but also the whole body may be detected. The captured image may include not only a part of the human body (the face, the whole body, or the like of the person) but also an object present in the background, and a cut-out image not including the background may be outputted as the captured image data (see Fig. 5B or the like).

Though captured image stream data 11 (see Fig. 7) includes (face presence flag 113, distribution permission flag 115, and magnification factor 117) in the description above, the captured image stream data does not have to include at least one of them or may include other data instead thereof or in addition thereto, as data indicating the image. For example, when captured image data 111 includes the face of the person, face presence flag 113 may be transmitted, and when captured image data 111 includes the face of the person, magnification factor 117 may be transmitted. In this case, stream data 11n includes only one of distribution permission flag 115 and magnification factor 117.

Though an example in which all items of state data are stored in stream data 11v (Fig. 7) is shown in the description above, at least some of the items of state data may be stored in respective different NAL units. For example, face presence flag 113 may be stored in one NAL unit and distribution permission flag 115 may be stored in another NAL unit. By storing face presence flag 113 and distribution permission flag 115 in different NAL units, timing of transmission of each flag or the like can flexibly be controlled.

Face presence flag 113 and magnification factor 117 may be transmitted only when the face mode is selected. Even when another mode is selected, however, at least one of face presence flag 113 and magnification factor 117 may be transmitted.

At least one of the items of state data (face presence flag 113, distribution permission flag 115, and magnification factor 117) included in captured image stream data 11 may be transmitted with a method (for example, in different stream data) different from the method for captured image stream data 11. For example, face presence flag 113 may be transmitted in captured image stream data 11 (stream data 11n) and distribution permission flag 115 may be transmitted in another stream. Though captured image data 111 should be transmitted for each frame, transmission for each frame of the state data may not be necessary. At least one of the items of the state data does not have to be in synchronization with captured image data 111 in some cases.

In the description above, face presence/absence information 153 (and face presence flag 113 generated based on face presence/absence information 153) is a binary value indicating whether or not the captured image includes a part of the human body (for example, the face of the person), and hence it is also data indicating that the captured image does not include a part of the human body and also data indicating that the captured image includes a part of the human body. Rather than use of such a binary value, information may be added only when the captured image does not include a part of the human body, or in contrast, information may be added only when the captured image includes a part of the human body. In the latter case, the reception terminal can determine that the captured image does not include a part of the human body based on no addition of information.

Magnification factor 157 (and magnification factor 117 in captured image stream data 11) instead of face presence/absence information 153 (and face presence flag 113 in captured image stream data 11) may be employed as information indicating whether or not the captured image includes a part of the human body (the face of the person). For example, when the magnification factor is set to "0" or to a value which is not normally used (for example, a negative value), the reception terminal may determine that the captured image does not include a part of the human body.

In the description above, magnification factor 157 (magnification factor 117 in captured image stream data 11) is exemplified as data indicating the size of the face of the person included in the captured image. Such data is information that allows determination as to whether or not the image of the face of the person has become grainy. For example, as magnification factor 157 is higher, an image can be determined as being more grainy (lower in quality).

The transmission terminal may transmit not magnification factor 157 itself but information (flag) indicating whether or not magnification factor 157 has exceeded a predetermined threshold value. Alternatively, the transmission terminal may transmit the image size of the partial image data corresponding to area 136, the size of the area of the detected face of the person, or the like.

When there is no face of the person in the captured image, the transmission terminal may generate and transmit an image including a message "face is not seen" in addition to transmission of the information indicating that there is no face of the person in the captured image. Transmission of information indicating that there is no face of the person in the captured image enhances a degree of freedom of processing in the reception terminal by way of example. For example, only when the reception terminal shows a screen image including the mute image and thereafter the mute image is selected, the reception terminal may show such a message as "face is not seen" or provide a pop-up representation. Alternatively, the reception terminal may show information indicating that there is no face of the person in the captured image at a position different from the shown mute image.

Exemplary processing for detecting whether or not the captured image includes a part of the human body when face mode display 148A shown in Fig. 5A is selected is exemplified in the description above. Whether or not the captured image includes a part of the human body may be detected and a result of detection may be transmitted also when contour cut-out mode display 148B shown in Fig. 5B is selected in addition to face mode display 148A shown in Fig. 5A.

When the transmission terminal is unable to detect the face of the person, it may notify the user to move his/her face into a range of detection by the camera.

Though exemplary processing for superimposing camera image 148 based on captured image data 111 transmitted from the transmission terminal on the game image is shown in the description above, camera image 148 based on captured image data 111 may be used in any manner. For example, camera image 148 may be superimposed on any image outputted by an application program executed in the reception terminal. Camera image 148 may be superimposed on main image 130. Furthermore, camera image 148 may be superimposed on any image (for example, a still image of the background or the like) outputted in the reception terminal.

In system 1 according to the present embodiment, the transmission terminal may distribute not only the image thereof but also voice and sound uttered by the user. Voice and sound may be distributed together with the image or may be distributed in different stream data.

While certain example systems, methods, devices, and apparatuses have been described herein, it is to be understood that the appended claims are not to be limited to the systems, methods, devices, and apparatuses disclosed, but on the contrary, are intended to cover various modifications and equivalent arrangements included within the spirit and scope of the appended claims.

## Claims

1. An information processing method in a system (1) comprising at least one transmission terminal (100) and at least one reception terminal (100), the information processing method comprising:
generating (S110, S120, S126, S130), at the transmission terminal, first image data (111), the generating the first image data comprising generating (S120), when an image captured by a camera comprises a part of a human body, an image of an area which is a partial area of the captured image and comprises the part of the human body, as the first image data;
transmitting (S136), at the transmission terminal, the first image data;
transmitting (S136), at the transmission terminal, state data based on a state of capturing the human body in the captured image;
receiving (S202), at the reception terminal, the first image data and the state data; and
generating (S220), at the reception terminal, an image to be shown on a display based on the state data, the generated image comprising an image based on the first image data or an image based on second image data in place of the first image data.

2. The information processing method according to claim 1, wherein
the generating first image data comprises generating (S126) predetermined image data as the first image data when a first condition is satisfied,
the first condition is a condition satisfied when the captured image does not comprise the part of the human body, and
the state data comprises first data (113) indicating that the captured image does not comprise the part of the human body.

3. The information processing method according to claim 2, wherein
the generating the first image data comprises generating (S110; S126) the predetermined image data as the first image data also when a second condition different from the first condition is satisfied, and
when the first condition is not satisfied and the second condition is satisfied, the transmission terminal transmits the first image data whereas the transmission terminal does not transmit the first data.

4. The information processing method according to claim 3, wherein
the second condition is a condition satisfied when not transmitting the image captured by the camera is selected.

5. The information processing method according to any of claims 1 to 4, wherein
the generating the first image data comprises generating (S120), when the area comprising the part of the human body in the captured image is smaller than a predetermined image size, an image obtained by enlarging the area comprising the part of the human body, as the first image data, and
the state data comprises second data (117) indicating a size of the part of the human body comprised in the captured image.

6. The information processing method according to claim 5, wherein
an image size of the first image data is predetermined.

7. The information processing method according to claim 5 or 6, wherein
the generating the first image data comprises generating the first image data such that a size of an area of the part of the human body included in the image corresponding to the first image data falls within a predetermined ratio range.

8. The information processing method according to any of claims 5 to 7, wherein
the second data comprises a magnification factor.

9. The information processing method according to any of claims 1 to 8, wherein
the part of the human body is a face of a person.

10. The information processing method according to any of claims 1 to 9, wherein
the transmission terminal is configured to transmit stream data in conformity with H.264 standard, the stream data comprising the first image data and the state data, and
the stream data comprises a first NAL unit (11v) comprising the first image data and a second NAL unit (11n) comprising the state data.

11. A system (1) configured to perform the information processing method according to any of claims 1 to 10.

12. An information processing apparatus (100) configured to operate as the transmission terminal in the information processing method according to any of claims 1 to 10.

13. A computer program (114) configured to cause a computer to perform processing as the transmission terminal in the information processing method according to any of claims 1 to 10.

14. An information processing apparatus (100) configured to operate as the reception terminal in the information processing method according to any of claims 1 to 10.

15. A computer program (114) configured to cause a computer to perform processing as the reception terminal in the information processing method according to any of claims 1 to 10.
